# EUROPÄISCHE PATENTSCHRIFT

(11) **EP 2 730 429 B1**
(45) Veröffentlichungstag und Bekanntmachung des Hinweises auf die Patenterteilung: **10.01.2018**
(21) Anmeldenummer: 12191678.7
(22) Anmeldetag: 07.11.2012
(51) Int. Cl.: B44B 5/02, B44C 5/04, B44F 9/00

(54) **Verfahren zur Herstellung eines dekorierten Wand- oder Bodenpaneels**
Method for producing a decorated wall or floor panel
Procédé de fabrication d'un panneau mural ou de sol décoré

(43) Veröffentlichungstag der Anmeldung: 14.05.2014
(73) Patentinhaber: Akzenta Paneele + Profile GmbH, 56759 Kaisersesch (DE)
(72) Erfinder: Hannig, Hans-Jürgen, 51427 Bergisch Gladbach (DE)
(74) Vertreter: Michalski Hüttermann & Partner Patentanwälte mbB

(56) Entgegenhaltungen:
- EP-A1- 1 762 671
- WO-A1-2011/051116
- WO-A2-2008/040760
- DE-A1-102006 028 239
- US-A1- 2002 127 372
- US-A1- 2006 130 421
- US-A1- 2008 106 568
- US-A1- 2009 151 866

## Beschreibung

Die vorliegende Erfindung betrifft ein Verfahren zum Herstellen eines dekorierten Wand- oder Bodenpaneels.
Solche dekorierten Platten sind an sich bekannt, wobei unter dem Begriff Wandpaneel auch Paneele zu verstehen sind, die zur Deckenbekleidung geeignet sind. Sie bestehen üblicherweise aus einem Träger oder Kern aus einem festen Material, beispielsweise einem Holzwerkstoff, der auf mindestens einer Seite mit einer Dekorschicht und einer Deckschicht sowie gegebenenfalls mit weiteren Schichten, beispielsweise einer zwischen Dekor- und Deckschicht angeordneten Verschleißschicht, versehen ist. Die Dekorschicht ist üblicherweise ein gedrucktes Papier, das mit einem Aminoplastharz imprägniert ist. Auch die Deckschicht und die übrigen Schichten werden meist aus Aminoplastharz hergestellt.
Aus dem Dokument US 6,888,147 B1 ist ein Verfahren zur Herstellung eines Paneels bekannt. Bei einem aus diesem Dokument bekannten Verfahren wird ein Dekor auf einen Kern aufgebracht, woraufhin das Dekor mit einer Lackschicht versehen wird. Um eine Strukturierung der Oberfläche zu erreichen, wird beispielsweise auf Basis von etwa mit einer Digitalkamera erhaltenen Daten die oberste Lackschicht nur teilweise aufgetragen.
Das Dokument WO 2008/040760 A2 beschreibt ein Verfahren zum Herstellen eines Paneels. Bei einem derartigen Verfahren soll insbesondere die Anzahl verschieden ausgestalteter Paneele bei einem Herstellungsschritt vergrößert werden, um so den natürlichen Eindruck zu verbessern. Hierbei werden ein (optisches) Dekormuster und eine davon unabhängige (haptische) Oberflächenstruktur erzeugt, welche sich wiederholend ausgebildet sind. Um die Varianz der erzeugten Paneele zu vergrößern, sollen sich das Dekormuster und die Oberflächenstruktur in einer unterschiedlichen Frequenz wiederholen. Es wird ferner beschrieben, dass die Oberflächenstruktur unter Verwendung einer Prägewalze eingebracht wird. Bezüglich der Ausgestaltung der Prägewalze wird dabei ausgeführt, dass diese unter Zuhilfenahme eines originalen Natur-Materials erzeugt werden kann. Im Detail kann hierzu das Natur-Material gebeizt werden, woraufhin ein Bild eingescannt und die so erhaltenen Daten zur Ausgestaltung des Prägemittels verwendet werden.

In bestimmten Anwendungsbereichen und insbesondere bei der Erfordernis von hochdetailgetreuen dekorierten Platten zeigen bisher bekannte Paneele jedoch gegebenenfalls eine nicht zufriedenstellende Dekorierung, insbesondere wenn die Imitierung eines natürlichen Werkstoffes wie beispielsweise Holz oder Naturstein gewünscht ist.
Es ist daher die Aufgabe der vorliegenden Erfindung ein verbessertes Verfahren zur Herstellung von dekorierten Wand- oder Bodenpaneelen bereitzustellen.
Gelöst wird diese Aufgabe durch ein Verfahren gemäß Anspruch 1.
Mit der Erfindung wird somit ein Verfahren zur Herstellung eines dekorierten Wand- oder Bodenpaneels vorgeschlagen, welches die Verfahrensschritte aufweist:
a) Bereitstellen eines plattenförmigen Trägers,
b) Aufbringen eines eine Dekorvorlage nachbildenden Dekors auf zumindest einen Teilbereich des plattenförmigen Trägers, und
c) Aufbringen einer Deckschicht auf zumindest einen Teilbereich des Dekors und Strukturieren der Deckschicht, welches dadurch gekennzeichnet ist, dass das Dekor die Dekorvorlage farblich vorlagenidentisch nachbildet und dass die Deckschicht mit einer bezüglich der Dekorvorlage vorlagenidentischen Strukturierung versehen wird unter Verwendung eines Prägemittels, dessen Prägeoberfläche auf Basis bereitgestellter dreidimensionaler Dekordaten der Dekorvorlage strukturiert ist. Es konnte gezeigt werden, dass dadurch, dass die Deckschicht mit einer vorlagenidentischen Strukturierung versehen wird unter Verwendung eines Prägemittels, dessen Prägeoberfläche auf Basis bereitgestellter dreidimensionaler Dekordaten ausgeformt ist, die aus dem Stand der Technik bekannten Nachteile hinsichtlich der Genauigkeit und Detailtreue einer Imitation des aufgebrachten Dekors überwunden werden können.

Unter dem Begriff "dekoriertes Wand- oder Bodenpaneel" beziehungsweise "Dekorpaneel" sind im Sinne der Erfindung insbesondere Wand-, Decken, oder Bodenpannele zu verstehen, welche ein auf eine Trägerplatte aufgebrachtes Dekor aufweisen. Dekorpaneele werden dabei in vielfältiger Weise sowohl im Bereich des Innenausbaus von Räumen, als auch zur dekorativen Verkleidung von Bauten, beispielsweise im Messebau, verwendet. Eine der häufigsten Einsatzbereiche von Dekorpaneelen ist deren Nutzung als Fußbodenbelag. Die Dekorpaneele weisen dabei vielfach ein Dekor auf, welches einen Naturwerkstoff nachempfinden soll.

Beispiele für solche nachempfundenen Naturwerkstoffe sind Holzarten wie beispielsweise Ahorn, Eiche, Birke, Kirsche, Esche, Nussbaum, Kastanie, Wenge oder auch exotische Hölzer wie Panga-Panga, Mahagoni, Bambus und Bubinga. Darüber hinaus werden vielfach Naturwerkstoffe wir Steinoberflächen oder Keramikoberflächen nachempfunden.

Entsprechend kann unter einer "Dekorvorlage" im Sinne der vorliegenden insbesondere verstanden werden ein derartiger originaler Naturwerkstoff beziehungsweise zumindest eine Oberfläche eines solchen, der durch das Dekor imitiert beziehungsweise nachempfunden werden soll.

Unter dem Begriff "dreidimensionale Dekordaten" können ferner im Sinne der vorliegenden Erfindung insbesondere elektronische Daten verstanden werden, welche die Dekorvorlage anhand ihrer dreidimensionalen Größe, Farbe, Strukturierung etc. wiedergeben und somit eine vollständige physikalische beziehungsweise räumliche haptisch und optisch identische oder zumindest im Wesentlichen identische Reproduktion der Dekorvorlage erlauben. Dabei können die dreidimensionalen Dekordaten unmittelbar aus der Dekorvorlage oder künstlich ermittelt beziehungsweise erzeugt werden und dabei beispielsweise in einer Datenbank für einen Zugriff gespeichert sein. Ferner können die dreidimensionalen Dekordaten insbesondere eine Auflösung aufweisen, um eine Unterscheidbarkeit insbesondere durch einen optischen oder haptischen Vergleich mit der Dekorvorlage durch einen Menschen nicht oder nur in gewünscht begrenztem Ausmaß zu ermöglichen.

Unter dem Begriff "vorlagenidentisch" kann im Sinne der vorliegenden Erfindung ferner verstanden werden ein hochdetailgetreues Nachempfinden beziehungsweise Imitieren der Dekorvorlage durch das aufgebrachte Dekor. Dabei kann ein Imitieren in jeder Raumrichtung beziehungsweise dreidimensional realisiert sein, wobei jedoch geringste Abweichungen aufgrund technischer Realisierbarkeit, wie etwa Abweichungen von den bereitgestellten Dekordaten beziehungsweise von der Dekorvorlage, von dem Begriff vorlagenidentisch umfasst sein soll. Darüber hinaus soll im Rahmen der vorliegenden Erfindung von dem Begriff vorlagenidentisch nicht nur eine bezüglich Farbe und/oder Struktur positive, sondern auch eine entsprechende negative Abbildung der Dekorvorlage umfasst sein.

Unter einem "plattenförmigen Träger" kann dabei ferner im Sinne der vorliegenden Erfindung ein Naturstoff, wie etwa ein Holzwerkstoff, ein Faserwerkstoff oder ein Werkstoff umfassend einen Kunststoff verstanden werden, der in der Form einer Platte ausgebildet ist und dabei insbesondere als Kern beziehungsweise als Basislage des herzustellenden Paneels dienen kann. Beispielsweise kann der plattenförmige Träger dem Paneel bereits eine geeignete Stabilität verleihen oder zu dieser beitragen. Ferner kann der plattenförmige Träger bereits die Form und/oder Größe des herzustellenden Paneels vorgeben. Jedoch kann der plattenförmige Träger auch als Großplatte vorgesehen sein. Eine Großplatte im Sinne der Erfindung ist dabei insbesondere ein Träger, dessen Abmessungen die Abmessungen der letztendliche Dekorpaneele um ein mehrfaches überschreiten und welche im Laufe des Herstellungsverfahrens in eine entsprechende Mehrzahl von Dekorpaneelen zerteilt wird, beispielsweise durch Sägen, Laser- oder Wasserstrahlschneiden.

Holzwerkstoffe im Sinne der Erfindung sind dabei neben Vollholzwerkstoffen auch Materialien wie beispielsweise Brettsperrholz, Brettschichtholz, Stabsperrholz, Furniersperrholz, Furnierschichtholz, Furnierstreifenholz und Biegesperrholz. Darüber hinaus sind unter Holzwerkstoffen im Sinne der Erfindung auch Holzspanwerkstoffe wie beispielsweise Spanpressplatten, Strangpressplatten, Grobspanplatten (Oriented Structural Board, OSB) und Spanstreifenholz sowie auch Holzfaserwerkstoffe wie beispielsweise Holzfaserdämplatten (HFD), mittelharte und harte Faserplatten (MB, HFH), sowie insbesondere mitteldichte Faserplatten (MDF) und hochdichte Faserplatten (HDF) zu verstehen. Auch moderne Holzwerkstoffe wie Holz-Polymer-Werkstoffe (Wood Plastic Composite, WPC), Sandwichplatten aus einem leichten Kernmaterial wie Schaumstoff, Hartschaum oder Papierwaben und einer darauf aufgebrachten Holzschicht, sowie mineralisch, beispielsweise mit Zement, gebundene Holzspanplatten bilden Holzwerkstoffe im Sinne der Erfindung. Auch Kork stellt dabei einen Holzwerkstoff im Sinne der Erfindung dar.

Im Sinne der Erfindung sind unter dem Begriff Faserwerkstoffe Materialien wie beispielsweise Papier und Vliese auf Basis pflanzlicher, tierische, mineralischer oder auch künstlicher Fasern zu verstehen, ebenso wie Pappen. Beispiele sind Faserwerkstoffe aus pflanzlichen Fasern sind neben Papieren und Vliesen aus Zellstofffasern Platten aus Biomasse wie Stroh, Maisstroh, Bambus, Laub, Algenextrakte, Hanf, Baumwolle oder Ölpalmenfasern. Beispiele für tierische Faserwerkstoffe sind etwa keratinbasierte Materialien wie beispielsweise Wolle oder Rosshaar. Beispiele für mineralische Faserwerkstoffe sind aus Mineralwolle oder Glaswolle.

Beispiele für thermoplastische Kunststoffe sind ferner Polyvinylchlorid, Polyolefine (beispielsweise Polyethylen (PE), Polypropylen (PP), Polyamid (PA), Polyurethan (PU), Polystyrol (PS), Acrylnitril-Butadien-Styrol (ABS), Polymethylmethacrylat (PMMA), Polycarbonat (PC), Polyethylenterephthalat (PET), Polyetheretherketon (PEEK) oder Mischungen oder Co-Polymerisate dieser. Die Kunststoffe können übliche Füllstoffe enthalten, beispielsweise Kalziumcarbonat (Kreide), Aluminiumoxid, Kieselgel, Quarzmehl, Holzmehl, Gips. Auch können sie in bekannter Weise eingefärbt sein. Insbesondere kann es vorgesehen sein, dass das Trägermaterial ein Flammschutzmittel aufweist.

Durch das vorbeschriebene Verfahren wird es möglich, eine Dekorvorlage auf besonders detailgetreue und hochgenaue Weise in dreidimensionaler Form zu imitieren beziehungsweise nach zu empfinden. Dies ist nicht nur möglich, indem die zweidimensionale Form einer Pore oder Ähnlichem eines Holzwerkstoffs, beispielsweise, mit einheitlicher Tiefe imitiert wird. Vielmehr kann auch eine in der Pore an sich unterschiedliche Tiefe beziehungsweise eine Tiefenverteilung der Pore möglich sein, so dass auch in dreidimensionaler Weise nicht nur eine vorlagenähnliche, sondern vielmehr eine vorlagenidentische Nachbildung der Dekorvorlage durch das Dekor möglich wird. In anderen Worten sind Poren oder andere strukturelle Eigenschaften der Dekorvorlage nicht nur in ihrer Breite beziehungsweise Länge sondern vielmehr auch in ihrer Tiefe beziehungsweise Tiefenverteilung bei unterschiedlichen Tiefen in einer Pore, beispielsweise, genau und realistisch nachbildbar.

Um eine derartige vorlagenidentische Nachbildung einer Dekorvorlage zu ermöglichen, wird bei einem vorbeschriebenen Verfahren eine auf das Dekor aufgebrachte Deckschicht mit einer vorlagenidentischen Strukturierung versehen. Dies wird realisiert unter Verwendung eines Prägemittels etwa unter Zuhilfenahme von Druck und erhöhter Temperatur, wobei das Prägemittel auf Basis bereitgestellter dreidimensionaler Dekordaten ausgeformt beziehungsweise strukturiert ist. Im Detail weist das Prägemittel, wie etwa ein Prägestempel, eine Prägeoberfläche, also eine während des Prägens mit dem zu prägenden Element in Kontakt gelangende Oberfläche, auf, die vorlagenidentisch strukturiert ist.

In dem Verfahren wird zunächst das Dekor auf den plattenförmigen Träger aufgebracht. Dies kann beispielsweise in herkömmlicher Weise realisiert werden etwa indem ein mit einem Dekor versehene Schicht, beispielsweise aus Papier, auf dem Träger befestigt wird. In dieser Stufe kann das so hergestellte Produkt bereits für eine spätere Verwendung gelagert werden oder unmittelbar weiterverwendet werden. Auf das Dekor wird in einem weiteren Verfahrens schritt eine Deckschicht aufgebracht, wie dies nachstehend erläutert wird. Unter einer Deckschicht kann dabei im Sinne der vorliegenden Erfindung insbesondere eine Schicht verstanden werden, welche auf dem Dekor angeordnet ist und dieses zumindest teilweise, insbesondere vollständig überdeckt. Die Deckschicht kann bei einem Paneel, das nach einem derartigen Verfahren hergestellt wird, im Wesentlichen zwei Funktionalitäten aufweisen. Zum Einen kann die Deckschicht als äußerer Abschluss aufgebrachte Schicht dienen, welche insbesondere die Dekorschicht vor Abnutzung oder Beschädigung durch Schmutz, Feuchtigkeitseinfluss oder mechanische Einwirkungen wir beispielsweise Abrieb schützt. Darüber hinaus hat die Deckschicht gemäß dem vorbeschriebenen Verfahren die weitere Funktion, eine Strukturierung aufzunehmen beziehungsweise dem Paneel und genauer dessen Oberfläche einen der Dekorvorlage identischen haptischen Eindruck zu verleihen.

Hierzu wird ein Prägemittel verwendet, welches in die Deckschicht eine entsprechende Struktur einprägt. Dies kann in Abhängigkeit des verwendeten Materials für die Deckschicht etwa realisiert werden unter Druck und gegebenenfalls unter erhöhter Temperatur. Das Prägemittel kann dabei in Abhängigkeit der gewünschten zu erzeugenden Struktur ein Negativ oder auch ein Positiv der einzubringenden Struktur sein und erlangt seine Form insbesondere durch Ausformen anhand von dreidimensionalen Dekordaten. Auf Basis derartiger Dekordaten kann somit in dem Prägemittel beziehungsweise an seiner Prägeoberfläche ein positives oder negatives Abbild beziehungsweise eine derartige Strukturierung der Dekorvorlage erzeugt werden, da diese Daten die Dekorvorlage identisch beschreiben und damit bei einem Verwenden zum Ausformen des Prägemittels eine zu der Dekorvorlage identische positive oder negative Strukturierung des zu erzeugenden Paneels erlauben.

Somit kann durch das vorbeschriebene Verfahren neben einer bezüglich Farbe und/oder Struktur positiven Abbildung ferner auch eine entsprechende negative Abbildung der Dekorvorlage möglich sein. Im Detail kann, wie es beispielsweise von einem Positiv-Beizen beziehungsweise Negativ-Beizen für Holzwerkstoffe bekannt ist, der Farbeindruck beispielsweise einer Maserung umgekehrt werden, so dass bezüglich der Farbe beziehungsweise insbesondere helleren und dunkleren Bereichen ein Negativ entsteht. Entsprechendes ist neben dem Farbeindruck jedoch ebenfalls für die aufgebrachte Struktur beziehungsweise in die Deckschicht eingeprägte Struktur möglich, so dass auch bezüglich der strukturellen Ausgestaltung durch die Verwendung von digitalen Daten neben einem Positiv ein Negativ realisierbar ist. Auch derartige Effekte sind auf Basis digitaler dreidimensionaler Daten problemlos und ohne Vorlaufzeit beziehungsweise Umbauten in einen Herstellungsprozess integrierbar.

Dabei kann bezüglich des Materials der Deckschicht beziehungsweise zumindest des strukturaufnehmenden Bereichs der Deckschicht, wie etwa einer Strukturlage wie unten beschrieben, eine Anpassung an das verwendete Prägemittel beziehungsweise an die durch das Prägemittel eingebrachte Struktur erfolgen. Insbesondere kann das Material als solches beziehungsweise die Aufarbeitung des Materials mit Bezug auf das Prägemittel beziehungsweise die durch das Prägemittel eingebrachte Struktur gewählt werden. Dabei können insbesondere die für eine Formgebung wichtigen Eigenschaften wie Verformbarkeit, Fließverhalten, etc. entsprechend gewählt werden. Somit kann eine Anpassung erfolgen insbesondere mit Bezug auf die Höhe, Breite, Tiefe und Musterung der eingebrachten Strukturen, damit diese auch nach einem Prägevorgang stabil bleiben und nicht vor einem Härten der Deckschicht, beispielsweise an Form verlieren. Dies kann beispielsweise erfolgen durch gezielte Beeinflussung der Fließeigenschaften über ein Teilhärten, die verwendete Materialzusammensetzung, oder ähnliche Maßnahmen.

Dabei kann insbesondere durch die Verwendung von digitalen Dekordaten ein höchstgenaues Ausbilden des Dekors und damit ein höchstgenauer Wahrnehmungseindruck des hergestellten Paneels möglich sein. Denn durch das Vorsehen von digitalen Dekordaten können Strukturierungen mit einer äußerst hohen Auflösung und damit höchst detailgetreu imitiert werden. Es kann ferner durch das Verwenden von digitalen Dekordaten besonders einfach, kostengünstig und dynamisch auf sich verändernde Kundenwünsche reagiert werden, da lediglich neue oder geänderte Dekordaten bereitgestellt werden müssen, auf Basis welcher ein wiederum hochgenau imitierendes Produkt erzeugbar sein kann.

Ferner kann durch das vorbeschriebene Verfahren in besonders vorteilhafter Weise ein sogenannter Heliochromeffekt realisierbar sein. Darunter kann im Sinne der vorliegenden Erfindung insbesondere verstanden werden, dass das Dekor Bereiche unterschiedlicher Glanzgrade wie etwa sowohl matte als auch glänzende Bereiche aufweist, die dabei insbesondere in unterschiedlichen Tiefen von Oberflächenstrukturierungen angeordnet sein können. Dadurch kann eine noch realistischere Abbildung der Dekorvorlage realisierbar sein.

Ferner kann das Prägemittel vor und/oder nach einem oder einer Mehrzahl an Prägeschritten auf einfache Weise rezykliert werden, indem beispielsweise die Struktur der Oberfläche abgetragen wird und auf Basis digitaler dreidimensionaler Daten eine neue Struktur in die Oberfläche des Prägemittels eingearbeitet wird. Dadurch kann ebenfalls besonders einfach die zu erzeugende Struktur abgewandelt werden, ohne dabei Aufwändige Umbauten durchführen zu müssen.

Aus dem Vorstehenden wird daher ersichtlich, dass durch das beschriebene Verfahren eine gegenüber dem Stand der Technik verbesserte Nachbildung der Dekorvorlage und damit ein höchst detailgetreues Produkt möglich sein kann.

Gemäß einer Ausgestaltung kann als Prägemittel eine Prägewalze verwendet werden. In eine Prägewalze kann zum Einen in geeigneter Weise eine Struktur eingebracht werden, um diese an die Deckschicht weiterzugeben beziehungsweise in die Deckschicht einzuprägen. Darüber hinaus ist eine Prägewalze oder ein Prägekalander für einen kontinuierlichen Prozess besonders geeignet, was das vorbeschriebene Verfahren auch für großtechnische Anwendungen besonders kostengünstig anwendbar gestalten kann. Ferner kann mit Prägewalzen als Prägemittel in geeigneter Weise ein genau definierter Druck auf die Deckschicht eingestellt werden, so dass aufgrund besonders definierter Bedingungen ein besonders definiertes und zu der Dekorvorlage identisches Ergebnis erzielbar ist. Dabei kann der Umfang der Prägewalze größer oder gleich der Länge des herzustellenden Paneels sein, um an jeder Stelle des Paneels eine gewünschte Struktur zu erzeugen.
Gemäß einer weiteren Ausgestaltung kann die Prägeoberfläche unter Verwendung elektromagnetischer Strahlung ausgeformt werden beziehungsweise kann das Prägemittel insbesondere an seiner Oberfläche mit einem Positiv oder Negativ der Struktur der Dekorvorlage versehen werden. Beispielsweise kann das Prägemittel unter Verwendung eines Lasers ausgeformt werden. Durch das Verwenden von elektromagnetischer Strahlung, wie etwa eines Lasers, kann die Strukturierung des Prägemittels als Negativ oder Positiv der Dekorvorlage besonders genau und auch mit höchster Auflösung eingebracht werden, so dass auch die zu prägende Deckschicht ein besonders genaues und detailgetreues Abbild der Dekorvorlage ist. Darüber hinaus sind insbesondere Verfahren, welche auf elektromagnetischen Wellen beziehungsweise auf elektromagnetischer Strahlung basieren, in einfacher Weise mit digitalen dreidimensionalen Daten zu speisen und ferner ausführbar, so dass das Verfahren in dieser Ausgestaltung besonders einfach realisierbar sein kann. Ferner arbeiten derartige Verfahren zum Ausformen des Prägemittels im Wesentlichen unmittelbar auf Basis der eingespeisten digitalen Daten. Dadurch ist das Verfahren in dieser Ausgestaltung besonders flexibel und es lassen sich auf einfache Weise Anpassungen an Kundenwünsche betreffend das herzustellende Paneel durchführen.
Gemäß einer weiteren Ausgestaltung kann das Prägemittel zumindest an seiner Prägeoberfläche einen Kunststoff aufweisen, der durch Laserstrukturierung mit anschließender Galvanisierung ausgeformt ist. Ein derartiger Prozess läuft in an sich für ein Galvanisieren von Kunststoff bekannter Weise ab. Im Detail kann zunächst die Oberfläche des Kunststoffs etwa unter Verwendung eines geeigneten Laserstrahls aufgeraut werden, um so eine definierte Struktur aufgeraute mit Kavernen beziehungsweise Haftpositionen zu formen, in welche elektrisch leitfähige Partikel, wie etwa Palladium, eingelagert werden können. Die Struktur kann dabei wie oben beschrieben auf Basis dreidimensionaler Dekordaten erzeugt werden. Durch die metallischen Partikel kann in einem weiteren Schritt etwa in einer außenstromlosen Metallisierung eine Metallschicht aufgebracht werden, welche aufgrund der Aufrauhung gut haftet. Alternativ kann, um die gewünschte Struktur zu erzeugen, die gesamt Oberfläche mit einer leitfähigen Schicht überzogen und anschließend mittels eines Laser die leitfähige Schicht, wie etwa eine Metallisierung, gezielt abgetragen werden, um so Isolationsbereiche auszubilden beziehungsweise Bereiche mit guter elektrischer Leitfähigkeit. Auf diese Grundschicht beziehungsweise insbesondere auf die metallischen Bereiche kann in einem weiteren Schritt mittels Galvanotechnik die gewünschte Oberflächenmetallisierung aufgebracht werden. Dadurch kann die Oberfläche des Prägemittels beziehungsweise seine Prägeoberfläche etwa eine hartmetallische Struktur aufweisen oder eine Struktur mit gezielten Eigenschaften, wodurch die erzielte Struktur in der Deckschicht gezielt beeinflussbar sein kann. Beispielsweise können so definiert Glanzgrade eingebracht werden. Darüber hinaus kann die Prägeoberfläche so zumindest lokal sehr hart und abriebsfest und dabei sehr haltbar sein.

Gemäß einer weiteren Ausgestaltung kann die Deckschicht mehrlagig aufgebracht werden. Beispielsweise kann die Deckschicht dabei eine Strukturlage und eine Schutzlage aufweisen. In dieser Ausgestaltung können auf besonders vorteilhafte Weise die verschiedenen Eigenschaften beziehungsweise Anforderungen der Deckschicht realisierbar sein, ohne dabei aufgrund jeweils anderer Erfordernisse potentiell Kompromisse eingehen zu müssen. Im Detail kann so eine erste Schicht beispielsweise eine Strukturlage bilden und dabei etwa unmittelbar auf das Dekor aufgebracht sein. Diese Lage kann beispielsweise als zähflüssige Masse aufgebracht werden und dabei eine gute insbesondere plastische Verformbarkeit aufweisen. In diesem Zustand kann dann die Struktur durch das Prägemittel eingeprägt werden. Nach dem Einprägen der Struktur kann das Material der Strukturlage beispielsweise gehärtet werden und so eine für die Strukturlage ausreichende Stabilität aufweisen. Eine weitere Schicht, welche auf der Strukturlage aufgebracht ist und insbesondere nach dem Prägen ausgebildet wird, kann im Weiteren als Schutzlage bezeichnet werden und als Hauptaufgabe dem Schutz des Paneels dienen. Bei der Auswahl des Materials dieser Lage braucht somit kein Augenmerk auf eine gute Formbarkeit gelegt werden, sondern das Material kann beispielsweise derart gewählt werden, dass es beispielsweise in einer einheitlichen Dicke auf der strukturierten Strukturlage verteilt ist, um so die vorlagenidentische Strukturierung nicht zu verfälschen. Im Weiteren kann das Material der Schutzlage beispielsweise aushärten und ferner insbesondere derart gewählt werden, dass es einen guten Schutz für die Strukturierte Schicht bieten kann, wie etwa eine gute Abriebfestigkeit. Somit kann in dieser Ausgestaltung ein besonders vorlagenidentisches und weiterhin besonders stabiles Paneel erzeugt werden.

Weiterhin kann ein mehrlagiger Aufbau vorteilhafterweise dazu dienen, insbesondere eine besonders kostengünstige Deckschicht zu erzeugen. Dazu kann beispielweise eine äußere Decklage aus einem Lack, wie etwa einem härtbaren Acryllack, ausgebildet sein, wohingegen die Deckschicht eine Grundlage aufweisen kann, welche aus einem kostengünstigeren Material ausgeformt ist und etwa aus einem Duroplast, wie etwa einem Melamin beziehungsweise einem Melaminharz ausgebildet ist. Dabei kann ferner wiederum die Decklage wie auch die gesamte Deckschicht bezüglich der Haptik an die gewünschten Anforderungen vorteilhaft ausgebildet sein. Dabei kann beispielsweise, jedoch nicht abschließend, die Grundlage der Strukturlage entsprechen, wohingegen die Decklage der Schutzlage entsprechen kann. Weiterhin kann die Decklage selbst ebenfalls einen Mehrschichtaufbau aufweisen beziehungsweise als Mehrschichtsystem aufgetragen werden. Insbesondere kann eine Mehrzahl an beispielsweise Lackschichten, insbesondere Acryllackschichten, aufgebracht werden. Dabei kann ein Mehrschichtaufbau der Decklage zweckmäßigerweise derart erfolgen, dass eine bereits durch das Prägemittel erzeugte Struktur nicht oder nicht wesentlich verändert wird.

Gemäß einer weiteren Ausgestaltung kann die Deckschicht zumindest teilweise aus einer strahlungshärtbaren Zusammensetzung geformt sein. Dabei können die Zusammensetzungen nach einem Heiß- oder nach einem Kaltverfahren aufgebracht werden. Beispielsweise kann ein strahlungshärtbarer Lack verwendet werden. Dabei kann es vorgesehen sein, dass die Verschleißschicht Hartstoffe wie beispielsweise Titannitrid, Titancarbid, Siliciumnitrid, Siliciumcarbid, Borcarbid, Wolframcarbid, Tantalcarbid, Aluminiumoxid (Korund), Zirconiumoxid oder Mischungen dieser aufweist, um die Verschleißfestigkeit der Schicht zu erhöhen. Dabei kann es vorgesehen sein, dass der Hartstoff in einer Menge zwischen 5 Gew.-% und 40 Gew.-%, vorzugsweise zwischen 15 Gew.-% und 25 Gew.-% in der Verschleißschichtzusammensetzung enthalten ist. Vorzugsweise weist der Hartstoff dabei einen mittleren Korndurchmesser zwischen 10 µm und 250 µm, weiter vorzugsweise zwischen 10µm und 100µm auf. Hierdurch wird vorteilhafter Weise erreicht, dass die Verschleißschichtzusammensetzung eine stabile Dispersion ausbildet und eine Entmischung bzw. ein Absetzten des Hartstoffes in der Verschleißschichtzusammensetzung vermieden werden kann. Zur Ausbildung einer entsprechenden Verschleißschicht kann es in einer Ausgestaltung vorgesehen sein, dass die Hartstoff enthaltende und strahlungshärtbare Zusammensetzung in einer Konzentration zwischen 10 g/m² und 250 g/m², vorzugsweise zwischen 25 g/m² und 100g/m² aufgetragen wird. Dabei kann die Auftragung beispielsweise mittels Walzen, wie Gummiwalzen oder mittels Gießvorrichtungen aufgetragen werden.

Beispielsweise kann es vorgesehen sein, dass der Hartstoff zum Zeitpunkt des Auftrages der Verschleißschichtzusammensetzung nicht in der Zusammensetzung enthalten ist, sondern als Partikel auf die aufgetragenen Verschleißschichtzusammensetzung aufgestreut wird und diese im Anschluss strahlungsinduziert gehärtet wird.

Ferner kann es vorgesehen sein, dass eine Bestrahlung mit einer den Aushärtungsprozess induzierenden Strahlung nur in dem Maße erfolgt, dass lediglich eine Teilhärtung der Deckschicht beziehungsweise einer auszubildenden Strukturlage erfolgt. In die so teilgehärtete Schicht kann mittels geeignetem Prägemittel eine gewünschte Oberflächenstruktur eingeprägt werden. Im Anschluss an die Einbringung der gewünschten Struktur in die teilgehärtete Deckschicht erfolgt eine weitere Härtung der nun strukturierten Deckschicht insbesondere durch eine weitere Bestrahlung der Schicht beziehungsweise der Strukturlage mit elektromagnetischer Strahlung oder Elektronenstrahlung. IM Anschluss kann gegebenenfalls eine Schutzlage aufgebracht werden.

Insbesondere kann die Deckschicht einen Acryllack aufweisen. Beispielsweise kann ein derartiger Lack als Schutzlage Verwendung finden oder als einzige Lage der Deckschicht oder besonders bevorzugt als Strukturlage. Insbesondere Acryllacke können zum einen eine gute plastische Verformbarkeit aufweisen, indem Sie in einer geeigneten Konsistenz beziehungsweise Viskosität au den Träger beziehungsweise auf das Dekor aufgebracht werden. Im Anschluss lassen sich Acryllacke ferner besonders vorteilhaft strahlungshärtbar verfestigen, so dass ferner eine besonders gute Festigkeit sowohl einer etwaigen Strukturlage, als auch einer Schutzlage erreichen lässt. Zusätzlich oder alternativ kann ein Melaminlack beziehungsweise Melaminharz in einer einzigen Deckschicht, in einer Strukturlage, Grundlage oder vorzugsweise in einer Schutzlage Verwendung finden.

Gemäß einer weiteren Ausgestaltung kann in das Dekor eine Markierung eingebracht werden, anhand welcher das Prägemittel relativ zu dem Dekor ausgerichtet werden kann. Beispielsweise kann die Markierung an einem Randbereich des Dekors angeordnet werden. In dieser Ausgestaltung kann in besonders einfacher und genauer Weise hochgenau eine mit dem Dekorbild übereinstimmende Oberflächenstrukturierung erzeugbar sein. Unter einer mit dem Dekorbild übereinstimmenden Oberflächenstrukturierung ist zu verstehen, dass die Oberfläche des Dekorpaneels eine haptisch wahrnehmbare Struktur aufweist, welche ihrer Form und ihrem Muster der Optik des aufgebrachten Dekors entspricht, um so eine möglichst originalgetreue Nachbildung eines natürlichen Werkstoffes auch hinsichtlich der Haptik zu erhalten. Beispielsweise kann so eine Synchronpore erzielbar sein. Eine Synchronpore kann dabei insbesondere eine Pore oder eine andersartige Struktur sein, welche räumlich exakt dort angeordnet ist, wo sie optisch dargestellt ist durch eine mit den optischen Dekormerkmalen übereinstimmende haptische Strukturierung. Dabei ist unter einer Ausrichtung des Prägemittels relativ zu dem Dekor gleichermaßen eine aktive Ausrichtung des Dekors relativ zu dem Prägemittel zu verstehen, wie auch eine aktive Ausrichtung des Prägemittels zu dem Dekor, wobei unter einer aktiven Ausrichtung beispielsweise eine entsprechende hochgenaue Verlagerung der entsprechenden Komponente verstanden werden kann.

Gemäß einer weiteren Ausgestaltung des Verfahrens können die dreidimensionalen Dekordaten bereitgestellt werden durch ein dreidimensionales Abtasten der Dekorvorlage. Insbesondere können die dreidimensionalen Dekordaten bereitgestellt werden durch ein dreidimensionales Abtasten der Dekorvorlage mittels elektromagnetischer Strahlung, beispielsweise durch einen dreidimensionalen Scanner (3D-Scanner). Durch ein derartiges Verfahren zum Bereitstellen der dreidimensionalen Dekordaten kann die Dekorvorlage jederzeit unmittelbar verwendet werden, um die entsprechenden Daten bereitzustellen und ein Paneel herzustellen. Dies kann insbesondere vorteilhaft sein für ein besonders schnelles und dynamisches Umstellen der Produktion. Darüber hinaus können die Dekordaten auch dreidimensional, also in jeder Raumrichtung, mit einer besonders hohen Auflösung von beispielsweise 1000dpi oder sogar darüber erhalten und für ein Herstellen des Paneels verwendet werden. Dadurch ist eine besonders qualitativ hochwertige Detailtreue möglich, was ein besonderes hochgenaues optisches und haptisches Nachempfinden der Dekorvorlage auch dreidimensional ermöglichen kann. Dabei können die dreidimensionalen Daten ferner erzeugt werden, ohne die Vorlage zu schädigen, so dass diese für eine grundsätzlich unbegrenzte Anzahl an Abtastvorgängen verwendbar ist und dabei unverfälschte Daten liefern kann.

Gemäß einer weiteren Ausgestaltung des Verfahrens kann das Dekor aufgebracht werden durch Direktdruck oder durch Kaschieren. Unter dem Begriff "Direktdruck" kann im Sinne der Erfindung das Aufbringen eines Dekors direkt auf den Träger eines Paneels oder auf eine auf dem Träger aufgebrachte nicht bedruckte Faserwerkstoffschicht verstanden werden. Entgegen der konventionellen Verfahren, bei welchen auf einen Träger eine zuvor mit einem gewünschten Dekor bedruckte Dekorschicht aufgebracht wird, erfolgt beim Direktdruck das Aufdrucken des Dekors unmittelbar im Zuge der Paneelherstellung. Dabei können unterschiedliche Drucktechniken, wie beispielsweise Flexo-Druck, Offset-Druck oder Siebdruck zum Einsatz gelangen. Insbesondere können dabei Digitaldrucktechniken, wie beispielsweise Inkjet-Verfahren oder Laserdruck-Verfahren eingesetzt werden. Die vorgenannten Druckverfahren sind dabei besonders ausgereift und insbesondere für eine Paneel-Herstellung vorteilhaft geeignet, um ein detailgetreues Dekor aufbringen zu können. Dabei ist im Sinne der Erfindung unter Direktdruck auch das Aufbringen des Dekores mittels Drucktechniken auf eine zuvor auf den Träger aufgebrachte bedruckbare Schicht zu verstehen. Eine solche bedruckbare Schicht kann beispielsweise durch eine flüssig aufgetragene und anschließend ausgehärtete Primerschicht, etwa aus Polyethylen, Polyacrylat, Polypropylen, oder auch eine zuvor aufgebrachte bedruckbare Folien-, Papier- oder Vliesschicht ausgebildet sein.

Dabei kann das Dekor aus einer insbesondere strahlungshärtbaren Farbe und/oder Tinte ausgebildet werden. Insbesondere lässt sich dadurch eine besonders schnelle Verfestigung erreichen, wodurch die Deckschicht schnell auf dem Dekor aufbringbar sein kann, was auch den Gesamtprozess in einer geringeren Zeit und damit besonders kostengünstig realisierbar machen kann. Unter dem Begriff strahlungshärtbare Farbe ist dabei im Sinne der Erfindung eine binde- und/oder füllmittelmittelhaltige sowie Farbpigmente aufweisende Zusammensetzung zu verstehen, welche induziert durch elektromagnetische Strahlung geeigneter Wellenlänge, wie beispielsweise UV-Strahlung, oder Elektronenstrahlung zumindest teilpolymerisiert werden kann. Unter dem Begriff strahlungshärtbare Tinte ist dabei entsprechend im Sinne der Erfindung eine im Wesentlichen Füllmittel freie, Farbpigmente aufweisende Zusammensetzung zu verstehen, welche induziert durch elektromagnetische Strahlung geeigneter Wellenlänge, wie beispielsweise UV-Strahlung, oder Elektronenstrahlung zumindest teilpolymerisiert werden kann.

Darüber hinaus kann ein Aufbringen des Dekors durch ein Kaschieren, wie insbesondere durch ein Trockenkaschieren realisierbar sein. Bei einem Kaschieren wird dabei ein Dekor, welches beispielsweise eine bedruckte Folie, ein bedrucktes Papier oder Ähnliches sein kann, mithilfe eines Kaschiermittels, wie etwa eines Klebstoffs oder eines Lackes, auf den Träger aufgebracht. Dabei kann für den exemplarischen Fall eines Trockenkaschierens etwa ein Trockenklebstoff Verwendung finden. Darüber hinaus kann beispielsweise bei einem Befestigen ein Einwirken erhöhter Temperatur und/oder Druck hilfreich sein, um eine stabile Verbindung des Dekors mit dem plattenförmigen Träger zu erreichen.

Gemäß einer weiteren Ausgestaltung des Verfahrens kann das Dekor auf zumindest einen Teilbereich eines zuvor aufgebrachten Primer aufgebracht werden. Diese Ausgestaltung kann insbesondere vorteilhaft sein bei einem Direktdruck des Dekors. Dabei kann als Primer eine flüssige strahlungshärtende Mischung auf Basis eines Urethans oder eines Urethanacrylats, gegebenenfalls mit einem Photoinitiator, einem Reaktivverdünner, UV-Stabilisatoren, Rheologiemitteln wie einem Verdicker, Radikalfängern, Verlaufshilfsmitteln, Entschäumern oder Konservierungsmitteln, Pigmenten und/oder einem Farbstoffe eingesetzt werden. Beispielsweise kann das Urethanacrylat in Form von reaktiven Oligomeren bzw. Prepolymeren in der Primer-Zusammensetzung enthalten sein. Unter dem Begriff "reaktives Oligomer" bzw. "Prepolymer" ist dabei im Sinne der Erfindung eine Urethanacrylat-Einheiten aufweisende Verbindung zu verstehen, welche strahlungsinduziert, ggf. unter Zusatz eines reaktiven Bindemittels oder eines Reaktivverdünners zu Urethan-Polymer oder Urethanacrylat-Polymer reagieren kann. Urethanacrylate im Sinne der Erfindung sind dabei Verbindungen, welche im Wesentlichen aus einem oder mehreren aliphatischen Strukturelementen und Urethangruppen aufgebaut sind. Aliphatische Strukturelemente umfassen sowohl Alkylengruppen, vorzugsweise mit 4 bis 10 C-Atomen, als auch Cycloalkylengruppen mit vorzugsweise 6 bis 20 C-Atomen. Sowohl die Alkylen- als auch die Cycloalkylengruppen können mit C₁-C₄-Alkyl, insbesondere mit Methyl, ein- oder mehrfach substituiert sein sowie ein oder mehrere nicht benachbarte Sauerstoffatome enthalten. Die aliphatischen Strukturelemente sind gegebenenfalls überquartäre oder tertiäre Kohlenstoffatome, über Harnstoffgruppen, Biureth-, Urethdion-, Allophanat-, Cyanurat-, Urethan-, Ester- oder Amidgruppen oder über Ethersauerstoff oder Aminstickstoff miteinander verbunden. Ferner können Urethanacrylate im Sinne der Erfindung auch ethylenisch ungesättigte Strukturelemente aufweisen. Hierbei handelt es sich vorzugsweise um Vinyl- oder Allylgruppen, die auch mit C₁-C₄-Alkyl, insbesondere Methyl substituiert sein können und welche sich insbesondere von α,β-ethylenisch ungesättigten Carbonsäuren bzw. deren Amiden ableiten. Besonders bevorzugte ethylenisch ungesättigte Struktureinheiten sind Acryloyl- und Me-thacryloylgruppen wie Acrylamido und Methacrylamido und insbesondere Acryloxy und Methacryloxy. Strahlungshärtbar im Sinne der Erfindung bedeutet, dass die Primerzusammensetzung induziert durch elektromagnetische Strahlung geeigneter Wellenlänge, wie beispielsweise UV-Strahlung, oder Elektronenstrahlung zumindest teilpolymerisiert werden kann.

Die Verwendung von strahlungshärtbaren Primern auf Basis von Urethanacrylaten ermöglicht in besonders vorteilhafter Weise eine sich umgehend an den Auftrag und die strahlungsinduzierte Härtung der Primerschicht anschließende Aufbringung eines Dekor, beispielsweise mittel Digitaldrucktechnik. Dabei sorgt die Primerschicht für eine gute Haftung des aufgebrachten Dekors auf der mit dem Primer beschichteten Trägeroberfläche. Dabei besitzen Urethanacrylate den Vorteil einer guten Haftung sowohl gegenüber dem Trägermaterial, als auch gegenüber der Dekorschicht, also der Dekorfarbe oder -tinte. Dies ist unter anderem durch die bei dieser Art der Polymere auftretenden Polymerisationsreaktionen zu begründen, bei welcher zum einen eine strahlungsinduzierte radikalische Polymerisation der OH-Gruppen auftritt, zum anderen eine Nachhärtung des Polymers über die NCO-Gruppen. Dies führt dazu, dass nach der strahlungsinduzierten Härtung umgehend eine klebfreie und weiterbearbeitbare Oberfläche erhalten wird, während die endgültigen Eigenschaften der Primerschicht auch durch die NCO-Gruppen basierte Nachhärtung beeinflusst werden und für eine sichere Bindung zum Trägermaterial sorgen. Darüber hinaus stellt die auftretende Nachhärtung sicher, dass eine hinreichende Schichtstabilität auch in weniger oder nicht belichteten Bereichen des Trägers erreicht wird. Hierdurch lassen sich mit dem erfindungsgemäßen Verfahren insbesondere auch vorstrukturierte Träger, also Träger, deren Oberfläche bereits eine dreidimensionale Strukturierung aufweisen, sicher mit Primerschicht versehen, wodurch sichergestellt ist, dass das anschließend aufgebrachte Dekor haftfest mit dem Träger verbunden ist.

Der Primer kann im erfindungsgemäßen Verfahren bevorzugt mittels Gummiwalzen, Gießmaschine, durch Aufsprühen auf die Trägerplatte aufgebracht werden. Bevorzugt wird der Primer in einer Menge zwischen ≥1 g/m² und ≤100 g/m², vorzugsweise zwischen ≥10 g/m² und ≤50 g/m², insbesondere zwischen ≥20 g/m² und ≤40 g/m² aufgetragen. Im Anschluss an den Auftrag des Primers auf die Trägeroberfläche erfolgt eine Bestrahlung mit einer Strahlungsquelle geeigneter Wellenlänge.

Gemäß einer weiteren Ausgestaltung kann ein Träger auf Basis eines Naturwerkstoffs, eines Kunststoffes oder eines Holz-Kunststoff-Komposite-Werkstoffes (WPC) bereitgestellt werden. Das Trägerplattenmaterial kann - je nach den gewünschten physikalischen Eigenschaften der fertigen Platte - massiv dicht sein oder mehr oder weniger große Hohlräume aufweisen, beispielsweise aufgeschäumt sein oder Hohlräume aufweisen, deren Größe in der Größenordnung der Plattenabmessungen liegt. Auch Schichtstrukturen aus mehreren der genannten Materialien können verwendet werden, beispielsweise Gipskarton- oder Holz-Kunststoff-Schichtplatten.

Beispielsweise kann die Trägerplatte aus einem thermoplastischen, elastomeren oder duroplastischen Kunststoff ausgebildet sein. Auch Platten aus Mineralien wie natürliche und künstliche Steinplatten, Betonplatten, Gipsfaserplatten, so genannte WPC-Platten (aus einem Gemisch von Kunststoff und Holz), sowie Platten aus natürlichen Rohstoffen wie Kork und Holz können erfindungsgemäß als Träger eingesetzt werden. Auch Platten aus Biomasse wie Stroh, Maisstroh, Bambus, Laub, Algenextrakte, Hanf, Ölpalmenfasern, können erfindungsgemäß verwendet werden. Des Weiteren sind Recyclingwerkstoffe aus den genannten Materialien im Rahmen des erfindungsgemäßen Verfahrens einsetzbar. Ferner können die Platten auf Basis des Naturwerkstoffs Cellulose, wie etwa aus Papier oder Pappe ausgestaltet sein.

Bevorzugt als Plattenmaterial sind thermoplastische Kunststoffe, wie Polyvinylchlorid, Polyolefine (beispielsweise Polyethylen (PE), Polypropylen (PP), Polyamide (PA), Polyurethane (PU), Polystyrol (PS), Acrylnitril-Butadien-Styrol (ABS), Polymethylmethacrylat (PMMA), Polycarbonat (PC), Polyethylenterephthalat (PET), Polyetheretherketon (PEEK) oder Mischungen oder Co-Polymerisate dieser. Die Kunststoffe können übliche Füllstoffe enthalten, beispielsweise Kalziumcarbonat (Kreide), Aluminiumoxid, Kieselgel, Quarzmehl, Holzmehl, Gips. Auch können sie in bekannter Weise eingefärbt sein. Insbesondere kann es vorgesehen sein, dass das Plattenmaterial ein Flammschutzmittel aufweist.

Insbesondere thermoplastische Kunststoffe bieten auch den Vorteil, dass die aus ihnen hergestellten Produkte sehr leicht rezykliert werden können. Es können auch Recycling-Materialien aus anderen Quellen verwendet werden. Hierdurch ergibt sich eine weitere Möglichkeit zur Senkung der Herstellungskosten.

Gemäß einer weiteren Ausgestaltung kann der plattenförmige Träger vor und/oder während Verfahrensschritt b) mit einem Mittel zur Verringerung der elektrostatischen Aufladung behandelt werden.

Durch das Vorsehen eines Mittels zur Verringerung der elektrostatischen Aufladung wie einer Einrichtung zur Ableitung elektrostatischer Ladungen aus den zu bedruckenden Trägern kann das Auftreten von Unschärfen im Laufe des Produktionsprozesses vermieden werden. Dies ist insbesondere für Druckverfahren zum Aufbringen der Dekorschichten geeignet, da die sich im Laufe des Produktionsprozesses aufbauende elektrostatische Ladung in den zu bedruckenden Trägern zu einer Ablenkung der Farb- bzw. Tintentropfen auf ihrem Weg vom Druckkopf zur zu bedruckenden Oberfläche führen kann. Dabei wird davon ausgegangen, dass das sich aufbauende elektrostatische Feld auf den Trägern die in der Regel positiv geladenen Farbpartikel ablenkt, so dass diese nicht auf dem vorgesehenen Punkt der zu bedruckenden Oberfläche auftreffen. Die so hervorgerufene Ungenauigkeit des Farbauftrags führt zu der wahrnehmbaren Unschärfe des Druckbildes. In Abhängigkeit der Produktionsgeschwindigkeit und des gewählten Trägermaterials tritt dieser Effekt in unterschiedlicher Ausprägung auf, so dass davon ausgegangen wird, dass die Träger, in Abhängigkeit des Trägermaterials, durch den Transport innerhalb der Fertigungsanlage elektrostatisch aufgeladen werden und diese Aufladung hinreichend ist, um den beobachteten Effekt hervorzurufen.

Dabei kann die Einrichtung zur Ableitung elektrostatischer Ladungen wenigstens eine Rolle, Bürste oder Lippe aus einem leitfähigen Material mit einer Leitfähigkeit ≥ 1*10³ Sm⁻¹ aufweisen, welche den Träger zumindest im Bereich des Druckwerks elektrisch leitend kontaktiert und welche mit einem elektrischen Massenpotential verbunden ist. Dabei kann das elektrische Massenpotential beispielsweise durch eine Erdung bereitgestellt werden.

Gemäß einer weiteren Ausgestaltung des Verfahrens kann es vorgesehen sein, dass zumindest Teilschritte des Verfahrens unter einer Inertgas-Atmosphäre ausgeführt werden. Insbesondere kann es dabei vorgesehen sein, dass der Verfahrensschritt des Aufbringens des Dekors beziehungsweise der Mehrzahl an Dekorschichten unter einer Inertgas-Atmosphäre durchgeführt wird. Geeignete Inertgase sind dabei beispielsweise Stickstoff, Kohlendioxid, Edelgase oder Mischungen dieser.

Dabei kann bei einer Herstellung des Wand- oder Bodenpaneels in den plattenförmigen Träger zumindest in einem Randbereich eine Profilierung eingebracht werden, und kann das Dekor auch auf der Profilierung aufgebracht sein. Bei einer Profilierung im Sinne der Erfindung ist es vorgesehen, dass mittels geeigneter materialabhebender Werkzeuge zumindest in einen Teil Kanten des Dekorpaneels ein dekoratives und/oder funktionales Profil eingebracht wird. Dabei ist unter einem funktionalen Profil beispielsweise die Einbringung eines Nut- und/oder Federprofils in eine Kante zu verstehen, um Dekorpaneele über die eingebrachten Profilierungen miteinander verbindbar zu gestalten. Ein dekoratives Profil im Sinne der Erfindung ist beispielsweise eine im Kantenbereich des Dekorpaneels eingebrachte Fase, um beispielsweise zwischen zwei miteinander verbundenen Paneelen nach deren Verbindung eine Fuge zu simulieren, wie sie beispielsweise bei sogenannten Landhausdielen auftritt.

Bei einer teilweisen Profilierung des Dekorpaneels werden nicht bereits alle in dem letztendlichen Paneel vorzusehenden Profile eingebracht, sondern nur ein Teil der vorzusehenden Profile, während weitere Profile in einem anschließenden Schritt eingebracht werden. So kann es beispielsweise vorgesehen sein, dass das in einem Paneel vorzusehende dekorative Profil, wie beispielsweise eine Fase, in einem Arbeitsschritt eingebracht wird, während das funktionale Profil, beispielsweise Nut/Feder in einem nachgelagerten Arbeitsschritt eingebracht wird.

Durch eine Aufbringung des Dekors erst nach dem zumindest teilweisen Profilieren des Trägers, etwa durch die vorbeschriebenen Verfahren wie beispielsweise Direktdruckverfahren, wird ein Abtragen oder Beschädigen des Dekors im Zuge der Profilierung in vorteilhafter Weise vermieden. Dadurch entspricht das Dekor auch in den Bereichen der Profilierung in detailgetreuer Weise der gewünschten Imitation beispielsweise eines Naturwerkstoffes.

Um eine besonders detailgetreue Imitierung auch in den profilierten Bereichen vorzusehen, kann die für den Druck genutzte Druckvorlage im Bereich der Profilierung des Paneels verzerrungskompensiert werden. Verzerrungskompensation bedeutet dabei im Sinne der Erfindung beispielsweise für den exemplarischen Fall der Aufbringung mit einem Druckverfahren, dass die durch die Abweichung der Profilierung aus der Oberflächenebene des Trägers, beispielsweise bei einer Fasenflanke, hervorgerufene Verzerrung des Druckbildes durch eine Anpassung der Druckvorlage an die Abweichung kompensiert wird. Dabei kann es beispielsweise vorgesehen sein, dass die Kompensation der Verzerrung mittels Anpassung des Bildpunktabstandes, der Bildpunktgröße und/oder des Farbauftrages in Abhängigkeit des vorgesehenen Kantenprofils des fertiggestellten Dekorpaneels erfolgt. Im Falle der Bedruckung mittels Digitaldruck kann dabei die Ansteuerung des Druckkopfes in Abhängigkeit der zu kompensierenden Verzerrung erfolgen, so dass der Druckkopf beispielsweise über den profilierten Bereich hinaus ausgelenkt wird und eine Anpassung des Farbausstoßes an das Profil erfolgt.

Hierbei ist es beispielsweise möglich, dass vor dem Aufbringen der Dekorschicht des als Großplatte bereitgestellten Trägers die in einem letztendlichen Paneelverbund vorzusehenden Fugen (wie beispielsweise V-Fugen) in den Träger gefräst werden, auf den so profilierten Träger zumindest die Dekorschicht aufgebracht wird und der Träger anschließend zumindest in den profilierten Bereichen zerteilt wird. In Abhängigkeit der Zerteilungsart, wie beispielsweise Sägen, Laser- oder Wasserstrahlschneiden, kann es dabei bevorzugt vorgesehen sein, dass die benötigte Schnittzugabe in dem eingebrachten Profil berücksichtigt wird.

Ferner kann ein zusätzlicher Profilierungsschritt zumindest in einem Teilbereich der Kanten des Dekorpaneels im Wesentlichen parallel zur Fläche des Paneels erfolgen. Hierdurch können beispielsweise die vorzusehenden funktionalen Profile, wie beispielsweise Nut und Feder, in das Paneel eingebracht werden, wodurch beispielsweise eine mechanische Verriegelung, wie etwa eine Hakenverriegelung einzelner Paneele untereinander möglich werden kann. Im Falle der Bereitstellung des Trägers als Großplatte erfolgt ein solcher zusätzlicher Profilierungsschritt vorzugsweise nach der Zerteilung in Einzelpaneele. Wir der Träger bereits in den gewünschten Abmessung des Einzelpaneels bereitgestellt, kann ein solcher zusätzlicher Profilierungsschritt auch zeitgleich mit der Einbringung der anderen Profile, wie beispielsweise einer Fase, erfolgen.
Offenbart wird ferner eine Paneelprägevorrichtung, aufweisend eine Zuführeinrichtung für einen zu prägenden plattenförmigen Träger, aufweisend ein Dekor und eine auf dem Dekor aufgebrachte Deckschicht, und ein Prägemittel zum Einprägen einer eine Dekorvorlage nachbildenden Struktur in die Deckschicht, wobei das Prägemittel eine auf Basis bereitgestellter dreidimensionaler Dekordaten vorlagenidentischen ausgeformte Prägeoberfläche aufweist. Beispielsweise kann das Prägemittel eine Prägewalze sein.
Eine derartige Anordnung ist in besonders vorteilhafter Weise dazu geeignet ein wie vorstehend ausgebildetes Verfahren auszuführen, um ein dekoriertes vorlagenidentisches Wand- oder Bodenpaneel herzustellen.
Die Erfindung ist nachfolgend anhand der Figuren sowie eines Ausführungsbeispiels weiter erläutert.
Fig. 1 zeigt schematisch ein nach einem erfindungsgemäßen Verfahren hergestelltes Wand- oder Bodenpaneels in einer geschnittenen Seitenansicht; und
Fig. 2 zeigt schematisch; eine Paneelprägevorrichtung zum Durchführen des erfindungsgemäßen Verfahrens.

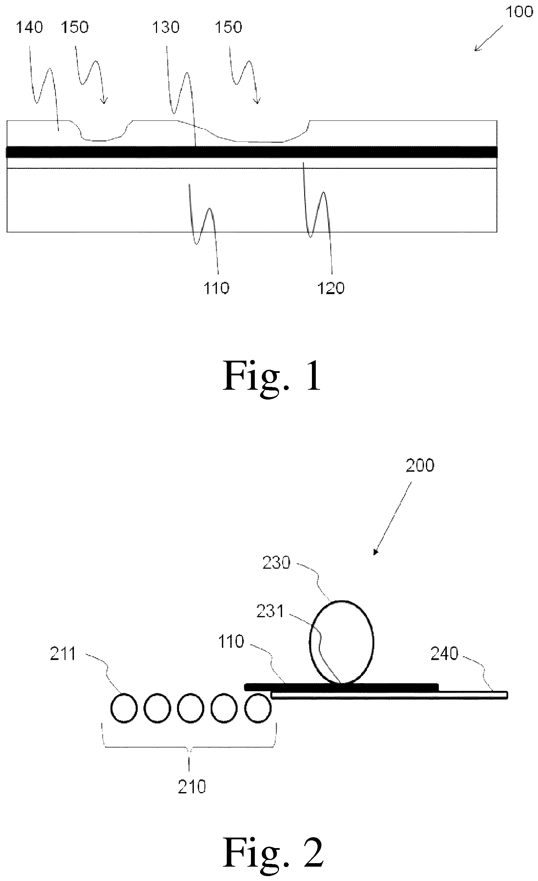

Die Fig. 1 zeigt ein gemäß einem erfindungsgemäßen Verfahren hergestelltes Wand- oder Bodenpaneel 100. Das Paneel 100 umfasst einen plattenförmigen Träger 110. Der Träger 110 umfasst oder besteht beispielsweise aus einem Material auf Basis eines Naturwerkstoffs, eines Kunststoffes oder eines Holz-Kunststoff-Komposite-Werkstoffes (WPC). Beispielsweise ist der Träger 110 aus einem extrudierten Kunststoffmaterial, wie etwa Polyethylen (PE), Polypropylen (PP), Polyamid (PA), Polyurethan (PU), Polystyrol (PS), Acrylnitril-Butadien-Styrol (ABS), Polymethylmethacrylat (PMMA), Polycarbonat (PC), Polyethylenterephthalat (PET), Polyetheretherketon (PEEK) oder Mischungen oder Co-Polymerisate dieser gefertigt.

Auf den Träger 110 kann eine Schicht 120 mit einem Primer aufgebracht sein, welche insbesondere ein strahlungsgehärtetes Polyurethanacrylat oder Polyurethan aufweist. Auf den Primer ist ferner ein Dekor 130, beispielsweise mittels geeigneter Drucktechniken wie beispielsweise Siebdruck, Digitaldruck, Flexodruck oder Offsetdruck, oder durch Kaschieren aufgebracht. Um eine Dekorvorlage nicht nur farblich durch das Dekor 130 sondern auch strukturell zu imitieren und ferner das Wand- oder Bodenpaneel 100 zu schützen, ist auf das Dekor 130 eine Deckschicht 140 aufgebracht. Dabei ist die Deckschicht 140 mit einer vorlagenidentischen Strukturierung versehen unter Ausbildung von Poren 150, beispielsweise. So kann etwa ein natürlicher Holzwerkstoff nachempfunden werden durch das dreidimensionale vorlagenidentische Ausbilden von Strukturen nicht nur in der Breite beziehungsweise Länge sondern vielmehr auch in ihrer Tiefe beziehungsweise Tiefenverteilung. Ferner kann das Wand- oder Bodenpaneel 100 beziehungsweise sein plattenförmiger Träger 110 zumindest in einem Randbereich eine Profilierung aufweisen, und kann das Dekor 130 auch auf der Profilierung aufgebracht sein. Die Deckschicht 140 kann dabei mehrlagig aufgebracht werden und eine Strukturlage und eine Schutzlage aufweisen und/oder zumindest teilweise aus einer strahlungshärtbaren Zusammensetzung geformt sein. Eine Paneelprägevorrichtung 200, um eine derartige Strukturierung in die Deckschicht 140 einzubringen, ist in Figur 2 gezeigt. Die Vorrichtung 200 weist eine Zuführeinrichtung 210, etwa umfassend Ableiteinrichtungen 211, beispielsweise Rollen beziehungsweise Walzen, für einen zu prägenden plattenförmigen Träger 110 auf, mittels welcher der Träger 110 einem Prägemittel 230, wie etwa einer Prägewalze, zugeführt wird. Das Prägemittel 230 weist eine Prägeoberfläche 231 auf, die beispielsweise aus einem Kunststoff, wie etwa Gummi geformt sein kann. Aus dem Vorstehenden ist dabei ersichtlich, dass der plattenförmige Träger 110 vor einem Zuführen zu dem Prägemittel 130 bereits ein Druckwerk zum Aufbringen eines Dekors 130 sowie eine Einrichtung zum Aufbringen einer Deckschicht 140 durchlaufen hat, wobei der plattenförmige Träger 110 vor und/oder während eines Druckauftrags des Dekors mit einem Mittel zur Verringerung der elektrostatischen Aufladung behandelt worden sein kann.
Ist der Träger 110 dem Prägemittel 230 zugeführt, kann der Träger 110 auf einer Unterstützung 240 beziehungsweise zwischen einer Unterstützung 240 und dem Prägemittel 230 angeordnet. Dabei weist das Prägemittel 230 eine auf Basis bereitgestellter dreidimensionaler Dekordaten, etwa durch ein dreidimensionales Abtasten einer Dekorvorlage, vorlagenidentisch, etwa unter Verwendung elektromagnetischer Strahlung, ausgeformte Prägeoberfläche auf. Das Prägemittel 230 beziehungsweise die Prägeoberfläche 231 kann einen Kunststoff aufweisen, der durch Laserstrukturierung mit anschließender Galvanisierung ausgeformt ist. Um ein besonders identisches Ergebnis zu erzielen kann ferner dabei in das Dekor 130 eine Markierung eingebracht werden, anhand welcher das Prägemittel 230 relativ zu dem Dekor 130 ausrichtbar ist.

## Patentansprüche

1. Verfahren zur Herstellung eines dekorierten Wand- oder Bodenpaneels (100), aufweisend die Verfahrensschritte:
a) Bereitstellen eines plattenförmigen Trägers (110),
b) Aufbringen eines eine Dekorvorlage nachbildenden Dekors (130) auf zumindest einen Teilbereich des plattenförmigen Trägers (110), und
c) Aufbringen einer Deckschicht (140) auf zumindest einen Teilbereich des Dekors (130) und Strukturieren der Deckschicht, **dadurch gekennzeichnet, dass** das Dekor (130) die Dekorvorlage farblich vorlagenidentisch nachbildet und dass die Deckschicht (140) mit einer bezüglich der Dekorvorlage vorlagenidentischen Strukturierung versehen wird unter Verwendung eines Prägemittels (230), dessen Prägeoberfläche (231) auf Basis bereitgestellter dreidimensionaler Dekordaten der Dekorvorlage strukturiert ist.

2. Verfahren gemäß Anspruch 1, wobei als Prägemittel (230) eine Prägewalze verwendet wird.

3. Verfahren gemäß Anspruch 1 oder 2, wobei die Prägeoberfläche (231) unter Verwendung elektromagnetischer Strahlung ausgeformt wird.

4. Verfahren gemäß einem der vorhergehenden Ansprüche, wobei das Prägemittel (230) zumindest an seiner Prägeoberfläche (231) einen Kunststoff aufweist, der durch Laserstrukturierung mit anschließender Galvanisierung ausgeformt ist.

5. Verfahren gemäß einem der vorhergehenden Ansprüche, wobei die Deckschicht (140) mehrlagig aufgebracht wird.

6. Verfahren gemäß einem der vorhergehenden Ansprüche, wobei die Deckschicht (140) zumindest teilweise aus einer strahlungshärtbaren Zusammensetzung geformt ist.

7. Verfahren gemäß einem der vorhergehenden Ansprüche, wobei in das Dekor (130) eine Markierung eingebracht wird, anhand welcher das Prägemittel (230) relativ zu dem Dekor (130) ausrichtbar ist.

8. Verfahren gemäß einem der vorhergehenden Ansprüche, wobei die dreidimensionalen Dekordaten bereitgestellt werden durch ein dreidimensionales Abtasten der Dekorvorlage unter Verwendung eines dreidimensionalen Scanners.

9. Verfahren gemäß einem der vorhergehenden Ansprüche, wobei das Dekor (130) durch Direktdruck oder durch Kaschieren aufgebracht wird.

10. Verfahren gemäß einem der vorhergehenden Ansprüche, wobei das Dekor (130) auf zumindest einen Teilbereich eines zuvor aufgebrachten Primer (120) aufgebracht wird.

11. Verfahren gemäß einem der vorhergehenden Ansprüche, wobei ein Träger (110) auf Basis eines Naturwerkstoffs, eines Kunststoffes oder eines Holz-Kunststoff-Komposite-Werkstoffes (WPC) bereitgestellt wird.

12. Verfahren gemäß Anspruch 11, wobei ein Träger (110) auf Basis eines thermoplastischen Kunststoffes ausgewählt aus der Gruppe bestehend aus Polyvinylchlorid, Polyolefine (beispielsweise Polyethylen (PE), Polypropylen (PP), Polyamide (PA), Polyurethane (PU), Polystyrol (PS), Acrylnitril-Butadien-Styrol (ABS), Polymethylmethacrylat (PMMA), Polycarbonat (PC), Polyethylenterephthalat (PET), Polyetheretherketon (PEEK) oder Mischungen oder Co-Polymerisate dieser bereitgestellt wird.

13. Verfahren gemäß einem der vorhergehenden Ansprüche, wobei der plattenförmige Träger (110) vor und/oder während Verfahrensschritt b) mit einem Mittel zur Verringerung der elektrostatischen Aufladung behandelt wird.

14. Verfahren gemäß einem der vorhergehenden Ansprüche, wobei in den plattenförmigen Träger (110) zumindest in einem Randbereich eine Profilierung eingebracht wird.

## Claims

1. Method for producing a decorated wall or floor panel (100) comprising the steps of:
a) providing a plate-shaped carrier (110);
b) applying a decor (130) which simulates a decor template onto at least a partial area of the plate-shaped carrier (110); and
c) applying a top layer (140) onto at least a partial area of the decor (130) and patterning the top layer;
**characterized in that**
the decor (130) simulates the decor template template identical with respect to the color; and
the top layer (140) is provided with a patterning, which is template identical with respect to the decor template, by means of an embossing means (230) whose embossing surface (231) is patterned based on provided three-dimensional decor data of the decor template.

2. Method according to claim 1, wherein an embossing roller is used as embossing means (230).

3. Method according to claim 1 or 2, wherein the embossing surface (231) is formed by use of electromagnetic radiation.

4. Method according to any one of the preceding claims, wherein the embossing means (230) comprises at least at its embossing surface (231) a plastic material which is formed by laser patterning followed by electroplating.

5. Method according to any one of the preceding claims, wherein the top layer (140) is applied in several layers.

6. Method according to any one of the preceding claims, wherein the top layer (140) is at least partially formed of a radiation curable composition.

7. Method according to any one of the preceding claims, wherein a marking is introduced into the decor (130) by means of which the embossing means (230) can be aligned relative to the decor (130).

8. Method according to any one of the preceding claims, wherein the three-dimensional decor data are provided by three-dimensionally scanning the decor template by use of a three-dimensional scanner.

9. Method according to any one of the preceding claims, wherein the decor (130) is applied by direct printing or laminating.

10. Method according to any one of the preceding claims, wherein the decor (130) is applied onto at least a partial area of a previously applied primer (120).

11. Method according to any one of the preceding claims, wherein a carrier (110) based on a natural material, a plastic or a wood-plastic composite material (WPC) is provided.

12. Method according to claim 11, wherein a carrier (110) based on a thermoplastic material selected from the group consisting of polyvinyl chloride, polyolefin (for example polyethylene (PE), polypropylene (PP), polyamide (PA), polyurethane (PU), polystyrene (PS), acrylonitrile-butadiene-styrene, polyether ether ketone (PEEK)) or mixtures or co-polymers thereof, is provided.

13. Method according to any one of the preceding claims, wherein the plate-shaped carrier is treated with a means for reducing the electrostatic charging prior to and/or during step b).

14. Method according to any one of the preceding claims, wherein at least one profiling is introduced into the plate-shaped carrier (110) at least in an edge region thereof.

## Revendications

1. Procédé de fabrication d'un panneau mural ou de sol décoré (100), présentant les étapes de procédé :
a) préparation d'un support (110) en forme de plaque,
b) application d'un décor (130) reproduisant un motif de décoration sur au moins une région partielle du support (110) en forme de plaque, et
c) application d'une couche de revêtement (140) sur au moins une région partielle du décor (130) et structuration de la couche de revêtement,
**caractérisé en ce que** le décor (130) reproduit le motif de décoration de manière identique au motif au niveau des couleurs et que la couche de revêtement (140) est munie d'une structuration identique au motif en ce qui concerne le motif de décoration moyennant l'utilisation d'un moyen de gaufrage (230) dont la surface de gaufrage (231) est structurée sur la base de données de décor tridimensionnelles préparées du motif de décoration.

2. Procédé selon la revendication 1, dans lequel, en tant que moyen de gaufrage (230), on utilise un rouleau de gaufrage.

3. Procédé selon la revendication 1 ou 2, dans lequel la surface de gaufrage (231) est mise en forme moyennant l'emploi d'un rayonnement électromagnétique.

4. Procédé selon l'une des revendications précédentes, dans lequel le moyen de gaufrage (230) présente une matière synthétique au moins sur sa surface de gaufrage (231), qui est mise en forme par une structuration par laser suivie d'une galvanisation.

5. Procédé selon l'une des revendications précédentes, dans lequel la couche de revêtement (140) est appliquée en plusieurs couches.

6. Procédé selon l'une des revendications précédentes, dans lequel la couche de revêtement (140) est formée au moins partiellement à partir d'une composition durcissable par rayonnement.

7. Procédé selon l'une des revendications précédentes, dans lequel un marquage est incorporé dans le décor (130), grâce auquel le moyen de gaufrage (230) peut être réalisé par rapport au décor (130).

8. Procédé selon l'une des revendications précédentes, dans lequel les données de décor tridimensionnelles sont préparées par un palpage tridimensionnel du motif de décoration moyennant l'emploi d'un dispositif de balayage tridimensionnel.

9. Procédé selon l'une des revendications précédentes, dans lequel le décor (130) est appliqué par une impression directe ou par un recouvrement.

10. Procédé selon l'une des revendications précédentes, dans lequel le décor (130) est appliqué au moins sur une région partielle d'un primaire (120) préalablement appliqué.

11. Procédé selon l'une des revendications précédentes, dans lequel un support (110) est préparé à base d'un matériau naturel, d'une matière synthétique ou d'un matériau composite bois-matière synthétique (WPC).

12. Procédé selon la revendication 11, dans lequel un support (110) est préparé à base d'une matière synthétique thermoplastique choisie dans le groupe constitué du chlorure de polyvinyle, des polyoléfines (par exemple, du polyéthylène (PE), du polypropylène (PP), de polyamide (PA), de polyuréthane (PU), de polystyrène (PS), d'acrylonitryle-butadiène-styrène (ABS), de polyméthacrylate de méthyle(PMMA), de polycarbonate (PC), de polyéthylène téréphtalate (PET), de polyéther éther cétone (PEEK) ou de mélanges ou de co-polymérisats de ceux-ci.

13. Procédé selon l'une des revendications précédentes, dans lequel le support (110) en forme de plaque est traité avec un produit pour la diminution de la charge électrostatique avant et/ou pendant l'étape de procédé b).

14. Procédé selon l'une des revendications précédentes, dans lequel un profilé est incorporé au moins dans une région de bordure du support (110) en forme de plaque.
